# EUROPEAN PATENT SPECIFICATION

(11) **EP 2 626 203 B1**
(45) Date of publication and mention of the grant of the patent: **13.09.2017**
(21) Application number: 11830739.6
(22) Date of filing: 06.10.2011
(51) Int. Cl.: B32B 27/18, B65D 73/02, H01B 5/14

(54) **SURFACE CONDUCTIVE MULTILAYERED SHEET**
MEHRSCHICHTIGE FOLIE MIT LEITFÄHIGER OBERFLÄCHE
FEUILLE MULTICOUCHE CONDUCTRICE EN SURFACE

(30) Priority: 01.12.2010 JP 2010268394; 07.10.2010 JP 2010227461
(43) Date of publication of application: 14.08.2013
(73) Proprietor: Denka Company Limited, Tokyo 103-8338 (JP)
(72) Inventor: AOKI Yutaka, Isesaki-shi Gunma 372-0855 (JP); TAKEI Atsushi, Isesaki-shi Gunma 372-0855 (JP); HIROKAWA Yasushi, Isesaki-shi Gunma 372-0855 (JP); MASUDA Yusuke, Isesaki-shi Gunma 372-0855 (JP)
(74) Representative: Blodig, Wolfgang
(86) International application number: PCT/JP2011/073106
(87) International publication number: WO 2012/046807

(56) References cited:
- WO-A1-2006/030871
- WO-A1-2006/030871
- WO-A1-2008/018473
- JP-A- 8 287 726
- JP-A- 9 254 297
- JP-A- 2002 367 437
- JP-A- 2005 254 711
- JP-A- 2005 297 504
- US-A- 5 747 164
- US-A1- 2010 196 719

## Description

### TECHNICAL FIELD

The present invention relates to a surface-conductive multilayered sheet comprising a thermoplastic resin suitable for use as a packaging material for a carrier tape or the like for packaging electronic components such as IC's.

### BACKGROUND ART

Vacuum-formed trays and embossed carrier tapes obtained by thermoforming thermoplastic resin sheets are used as formats for packaging semiconductors and electronic components, particularly integrated circuits (IC's) and electronic components using integrated circuits (IC's). Examples of thermoplastic resins used in sheets for use in containers for packaging IC's and various components having IC's include polystyrenic resins, ABS resins, polyester resins and polycarbonate resins. Among these, conductive sheets having a substrate layer consisting of an ABS resin and having a conductive layer comprising a polystyrenic resin containing carbon black or the like formed on the surface thereof are often used for having the effect of preventing problems due to static electricity while simultaneously having exceptional mechanical properties (see Patent Documents 1 and 2). However, the miniaturization of electronic components such as IC's in recent years has focused much attention on the occurrence of flash or burrs on cut sections when slitting an original sheet to tape width or when punching sprocket holes or the like during embossment as a large problem needing to be solved regarding the performance of carrier tape or the like.

With the purpose of solving this problem, for example, the blending of polyolefins, styrene-butadiene-styrene block copolymers, and styrene-ethylene-butylene-styrene block copolymers into the substrate layer or the surface-conductive layer has been proposed (see, e.g., Patent Documents 3 and 4). While the flash and burrs generated by slitting and punching of sprocket holes may be improved by taking such measures, almost no improvement was observed in some cases, depending on the method of slitting or the forming equipment used for embossment. Additionally, the problem of flash and punching burrs is not limited to sheets with substrate layers of ABS resin, the problem occurs in all the above-mentioned resins, albeit with some differences in degree, and improvement is sought for sheets using various types of resins.

### RELATED ART

### Patent Documents

Patent Document 1: JP H9-174769 A
Patent Document 2: JP 2002-292805 A
Patent Document 3: WO 2006/030871
Patent Document 4 : JP 2003-170547 A

### SUMMARY OF THE INVENTION

### Problems to be Solved by the Invention

The present invention addresses the problem of offering a surface-conductive thermoplastic resin sheet that suppresses problems associated with the occurrence of flash and burrs for slitting methods or punching for embossment for any type of forming apparatus, and a formed article such as an embossed carrier tape using such a sheet.

### Means for Solving the Problems

The present inventors performed diligent research towards solving the aforementioned problems, whereupon they discovered that a sheet with extremely little flash and burr occurrence can be stably obtained under a wide range of punching conditions when punching sheets, by providing the substrate sheet with a multilayered structure of 10 to 50 layers and forming a conductive layer containing carbon black on the surface thereof, thereby achieving the present invention.

That is, the present invention is a conductive multilayered sheet, comprising a substrate sheet comprising 10 to 50 laminated layers, each layer being composed of a thermoplastic resin A or a resin composition whose main component is thermoplastic resin A, with an average thickness of 2 to 50 µm; and having a conductive resin layer comprising 65 to 95 mass% of a thermoplastic resin B or a resin composition whose main component is thermoplastic resin B, and 5 to 35 mass% of carbon black, laminated onto a surface on one side or on both sides of the substrate sheet. Thermoplastic resin A should preferably be one resin chosen from among polystyrenic resins, ABS resins, polyester resins and polycarbonate resins, among which extremely strong effects are obtained when the thermoplastic resin A is an ABS resin. On the other hand, the thermoplastic resin B used in the surface layer should preferably be one resin chosen from among polystyrenic resins, ABS resins, polyester resins and polycarbonate resins, among which polystyrenic resins and polycarbonate resins are particularly preferable for the thermoplastic resin B. Additionally, the sheet of the present invention should preferably have a burr occurrence rate of 4% or less, less than 3.5%, 3% or less, or 1.5% or less at end surfaces that have been worked in cutting and punching processes. Furthermore, the sheet of the present invention should preferably be such that burrs are not formed on processed end surfaces during cutting and punching processes, or even if present, the lengths of the burrs are 0.5 mm or less.

The present invention includes electronic component packaging, carrier tape and trays comprising the conductive multilayered sheet described above.

### Effects of the Invention

By using the surface-conductive multilayered sheet of the present invention, it is possible to form sprocket holes of stable hole dimensions, greatly suppressing the occurrence of flash and burrs, over a wide range of punching conditions such as a pin/die clearance on one side of 5 to 50 µm and a punching speed of 10 to 300 mm/sec during secondary processing for punching and slitting embossed carrier tapes or the like, making it possible to obtain a good product. Additionally, it is also possible to obtain slit end surfaces of stable sheet width with little flash or burrs and limited flash or burr length for slitting processes using ring-shaped combination blades as well.

### BRIEF DESCRIPTION OF THE DRAWINGS

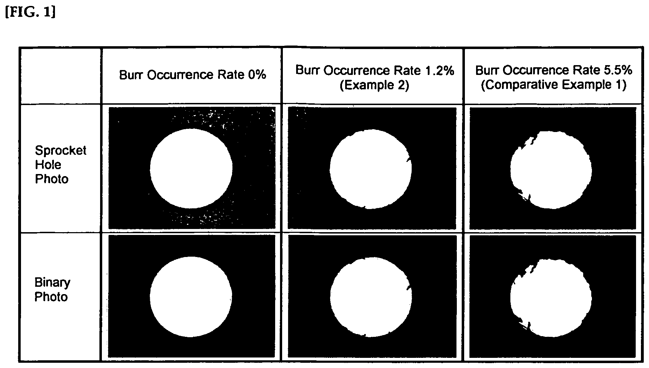

Fig. 1 shows examples of measuring microscope photographs showing the state of flash and burrs when punching sheets.

### MODES FOR CARRYING OUT THE INVENTION

The present inventors studied the occurrence of burrs when punching publicly known conductive sheets having conductive surface layers laminated onto the surfaces on both sides of a substrate layer, and found that in many cases, the burrs occur not in the surface layers but in the substrate layers. After performing diligent research towards a method of suppressing the occurrence of burrs based on this discovery, they found that a conductive thermoplastic resin sheet with very little occurrence of flash or burrs for any type of forming apparatus can be obtained by forming a conductive resin layer comprising a thermoplastic resin B containing carbon black or a resin composition having the thermoplastic resin B as a main component on the surface on one side or both sides of a substrate sheet of multilayered structure comprising a thermoplastic resin A or a resin composition having the thermoplastic resin A as a main component.

The thermoplastic resin A and thermoplastic resin B are generally resins chosen from among polystyrenic (PS) resins, ABS resins, polyester resins and polycarbonate (PC) resins. In this case, PS resins include polystyrene resins and rubber-modified styrene resins (rubber-g-styrene resins and high impact styrene resins). Examples of aromatic vinyl monomers for forming the PS resins include styrene, alkyl-substituted styrene (e.g., vinyl toluene, vinyl xylene, p-ethyl styrene, p-isopropyl styrene, butyl styrene, p-t-butyl styrene etc.), halogen-substituted styrene (e.g, chlorostyrene, bromostyrene etc.) and α-alkyl-substituted styrene (e.g., α-methyl styrene etc.). These aromatic vinyl monomers may be used alone or with two or more in combination. Of these monomers, styrene, vinyl toluene and α-methyl styrene, particularly styrene, are normally used.

The ABS resin refers to a resin or a resin composition having a diene rubber-aromatic vinyl monomer-vinyl cyanide monomer terpolymer as the main component, typically one having an acrylonitrile-butadiene-styrene terpolymer as the main component. Specific examples include acrylonitrile-butadiene-styrene terpolymers and mixtures of an acrylonitrile-butadiene-styrene terpolymer and an acrylonitrile-styrene biopolymer. In the present invention, the use of an acrylonitrile-butadiene-styrene terpolymer is preferable, and the use of a mixture of an acrylonitrile-butadiene-styrene terpolymer and an acrylonitrile-styrene biopolymer is even more preferable. In addition to the aforementioned monomer units, these polymers include monomers such as α-methyl styrene, vinyl toluene, dimethyl styrene, chlorostyrene and vinyl naphthalene as trace amounts of styrene monomers. Additionally, they may include those containing monomers such as methacrylonitrile, ethacrylonitrile and fumaronitrile as trace amounts of vinyl cyanide monomers. While the following descriptions will dispense with mention of trace components, such components may be included within such a range as not to detract from the effects of the present invention.

The polyester resin may, in addition to a polyester resin obtained from aromatic and aliphatic polyfunctional carboxylic acid and polyfunctional glycol, may be a hydroxycarboxylic acid polyester resin. Examples of the former include polyethylene terephthalate, polybutylene terephthalate, polyethylene naphthalate, polybutylene naphthalate, polyethylene adipate, polybutylene adipate and copolymers thereof. Examples of copolymers include polyester resins copolymerizing polyalkylene glycol and polycaprolactone. Examples of the latter include polylactic acid, polyglycolic acid and polycaprolactone. Copolymers of the former and the latter also may be used.

The polycarbonate resin should be derived from dihydroxy compounds, among which aromatic dihydroxy compounds are preferable, and aromatic dihydroxy compounds (bis-phenol) having two aromatic dihydroxy compounds linked by some kind of linking group are particularly preferred. These may be produced by known production techniques, their production techniques are not limited, and commercially available resins may be used.

The substrate sheet of multilayered structure of the present invention preferably has a plurality of layers composed of one type of thermoplastic resin A chosen from the aforementioned thermoplastic resins or a resin composition having the thermoplastic resin A as the main component, but it includes multilayered structures formed by alternating layers of two different types of thermoplastic resin. In this case, a "resin composition having thermoplastic resin A as the main component" is a resin composition containing at least 50 mass% of thermoplastic resin A in 100 mass% of the resin composition. If a PS resin, the aforementioned resin may be mixed, for example, with a block copolymer of a styrene and a diene such as a styrene-butadiene (SB) block copolymer or an olefin-styrene block copolymer or polyolefin which is a hydrogenate thereof, within such a range that the modifier does not exceed 50 mass%. Additionally, if a polycarbonate (PC) resin, the resin may be mixed with an ABS resin, a polyethylene terephthalate resin or a polybutylene terephthalate resin within such a range that the modifier does not exceed 50 mass%. Similarly, resin components may be added as various types of modifiers to an ABS resin or a polyester resin as well, within a range as not to exceed 50 mass%. Furthermore, it is possible to add various types of additives such as lubricants, plasticizers and processing aids as needed.

While the method of production of the substrate sheet of multilayered structure will be described below, this substrate sheet is a multilayered sheet formed from 10 to 50, preferably 20 to 40, more preferably 25 to 35 separate layers of substantially the same resin component with an average thickness of 2 to 50 µm, preferably 3 to 35 µm, more preferably 5 to 10 µm. Even if the individual layers are formed of the same component, a boundary still exists between each layer. While not more than conjecture, it is thought that when such a multilayered sheet is punched, even if a burr is formed due to stretching of the resin in one layer, the thinness of a single layer serves to restrict the length of the burr, and the growth of the burr will stop at the boundary with the next layer, resulting in an effect of inhibiting problematic burrs. Regarding the formation of burrs when punching the multilayered sheet of the present invention, if the thickness of each layer is less than 2 µm, then the individual layers are too thin, so that the behavior of the entire sheet when pinched between a punching pin and a die is roughly the same as that for a single layer, and the burr limiting effect of a multilayered structure is not obtained. Additionally, if 50 µm is exceeded, then the multilayer effects are lost, so that the burrs caused by stretching of the resin in the individual layers can become too long, so the occurrence of problematic burrs cannot be restricted. On the other hand, if there are less than 10 individual layers, then the burrs formed by stretching of resins generated from each layer can become too long as in the case when the thickness of each layer exceeds 50 µm, and if there are more than 50 layers, then the behavior of the entire sheet approximates that of a single layer as in the case where each layer is less than 2 µm thick, so that the multilayer effects cannot be obtained.

The surface-conductive multilayered sheet of the present invention has a surface layer comprising 65 to 95 mass%, 70 to 90 mass%, 70 to 80 mass% or 80 to 90 mass% of a thermoplastic resin B or a resin composition having thermoplastic resin B as the main component, and 5 to 35 mass%, 10 to 30 mass%, 20 to 30 mass% or 10 to 20 mass% of carbon black on one or both surfaces of a substrate sheet of multilayered structure. The "resin composition having the thermoplastic resin B as the main component", as with the description of thermoplastic resin A, refers to a resin composition wherein at least 50 mass% of the resin component is the thermoplastic resin B. This thermoplastic resin B may be the same or different from the thermoplastic resin A of the substrate sheet of multilayered structure. If the carbon black content in 100 mass% of the surface layer is less than 5 mass%, then a sufficiently low surface resistance cannot be obtained, and if exceeding 35 mass%, the melt fluidity of the surface layer can be greatly reduced so that a good surface layer cannot be obtained, as described below.

As described above, the multilayered sheet of the present invention has a conductive resin layer loaded with carbon black on one or both surfaces of the substrate sheet of multilayered structure, whereby the buildup of electrostatic charge can be prevented and the surface can be reinforced to increase the mechanical strength (tensile strength, breaking strength, impact strength), and preventing the occurrence of rollover and exit burrs in the resin during cutting and punching processes, thereby reducing the occurrence of flash and burrs during processing.

The method of producing a surface-conductive multilayered sheet according to the present invention shall be described. Basically, resins to form the substrate sheet of multilayered structure and the surface layers containing conductive resin are supplied to separate extruders, melt-kneaded and supplied to feed blocks or multimanifold dies, and one or both surfaces of the substrate sheet are laminated to form a surface layer to extrusion-form a surface-conductive multilayered sheet. The method of laminating the substrate sheet and surface layer may be a method similar to generally known methods for producing multilayered sheets.

Next, a method of obtaining a substrate sheet of multilayered structure will be described.

The substrate sheet of multilayered structure of the present invention, as described above, is composed of 10 to 50 separate layers of the same composition, so the thermoplastic resin A or resin composition thereof can basically be melt-extruded with a single extruder. For example, if the melt fluidity is near laminar flow, then a multilayered structure can be obtained by inserting a static mixer with a specific number of elements between the extruder and the die.

On the other hand, a method such as described, for example, in JP 2007-307893 A, wherein the thermoplastic resin is supplied from two extruders and the melted resin from each fluid path is fed to a multimanifold type feed block, which is a publicly known type of laminating device, and a square mixer, or to only a comb-type feed block, may be used to obtain a multilayered structure with 10 to 50 layers. A square mixer is a publicly known type of tube element that divides a polymer flow route into two flow routes of quadrilateral cross section, having a combining portion for recombining the separated polymer as upper and lower layers in the thickness direction. Additionally, by separating the flow path of the melted resin extruded from a single extruder into two paths by publicly known means and supplying each to the feed block via separate routes, it is possible to form multiple layers just as in the case where two extruders are used as mentioned above.

The surface-conductive multilayered sheet of the present invention can be used to form an electronic component packaging container of various shapes such as a carrier tape (embossed carrier tape), a tray or the like by using publicly known sheet forming methods (thermoforming) such as vacuum forming, compressed-air forming and press forming. By using the surface-conductive multilayered sheet of the present invention, it is possible to obtain a packaging container that greatly reduces the generation of flash or burrs on the cut section when slitting the surface-conductive multilayered sheet or punching sprocket holes or the like for formation of the electronic component packaging container. In particular, it is extremely effective for embossment of carrier tape. By making use of such formation and secondary processing, it is possible to produce an embossed carrier tape excelling in dimensional precision of slit width, punching hole diameter and the like, and with extremely limited generation of burrs during punching.

More specifically, with secondary processing steps such as slitting and punching of the embossed carrier tape of the present invention, it is possible to obtain sprocket holes with stable hole diameter dimensions and extremely restricted flash and burr generation for punching conditions such as a standard wide range of between 5 and 50 µm for pin/die clearance on one side and a wide range of punching speeds such as 10 to 300 mm/sec. Additionally, for slitting processes using ring-shaped combination blades, it is possible to obtain slit end surfaces with little flash or burrs, and stable sheet width.

The embossed carrier tape of the present invention can be used to house electronic components in receptacle portions formed by the aforementioned forming methods, then covered by cover tape and wound into a reel to form a carrier tape body that can be used to store and transport the electronic components.

### EXAMPLES

While the present invention will be explained in detail using examples, the present invention is not limited to what is described in these examples.

### (Example 1)

A multilayer sheet forming apparatus equipped with a feed block and square mixer for forming a multilayered substrate layer, and a multimanifold die for laminating the substrate layer with a surface conductive layer, was used to form a multilayered sheet by the below-described method.

For the substrate layer, an ABS resin (SE-10, Denki Kagaku Kogyo) was melt-kneaded with a *φ* 65 mm uniaxial extruder, and the same resin was used to laminate ten layers using a feed block and a square mixer on the flow path. Additionally, pellets prepared beforehand by biaxial kneading (PCM-40, Ikegai Iron Works) of 80 mass% of a HIPS resin (H850, Toyo Styrene) and 20 mass% of acetylene black (Denka Black granules, Denki Kagaku Kogyo) were melt-kneaded in a *φ* 40 mm uniaxial extruder, then merge-laminated with the aforementioned ten-layered substrate layer, and cooled to harden with a roll set to a temperature of 80 °C to form a multilayered sheet. The total thickness of the resulting sheet was 200 µm (average thickness of each layer: 16 µm), and the proportion of the surface layer was 20% (10% on each side).

### (Example 2 and Example 3)

Multilayered sheets were produced in the same manner as Example 1, except that the number of layers in the substrate layer were set to 30 layers and 50 layers, and the average thickness of each layer was changed to respectively 5.3 and 3.2 µm as shown in Table 1.

### (Example 4)

A multilayered sheet was produced in the same manner as Example 1, except that the average thickness per layer of the substrate layer was set to 32 µm, and the total thickness of the multilayered sheet was 400 µm.

### (Example 5 and Example 6)

Multilayered sheets were produced in the same manner as Example 5, except that the amount of acetylene black added to the surface conductive layer was set respectively to 10 mass% and 30 mass%.

### (Example 7)

For the substrate layer, a multilayered sheet was produced in the same manner as Example 1, except that an ABS resin (SE-10, Denki Kagaku Kogyo) and a HIPS resin (H850, Toyo Styrene) were separately melt-kneaded with two *φ* 65 mm uniaxial extruders, and ten layers alternating between layers containing the respective resins were laminated using a multimanifold type feed block and a square mixer on the two types of resins on the flow path, and the average thickness per layer of the sheet was set to 32 µm and the total thickness of the multilayered sheet was set to 400 µm.

### (Comparative Examples 1-3)

Multilayered sheets were produced in the same manner as Example 1, except that the number of layers in the substrate layer was set to 1 layer, 5 layers and 120 layers, and the average thickness per layer was changed as shown in Table 2.

### (Comparative Example 4)

A single-layered sheet was produced by melt-kneading an ABS resin (SE-10, Denki Kagaku Kogyo) in a *φ* 65 mm uniaxial extruder, using a sheet forming apparatus with a T-die, and cooling to harden with a roll set to a temperature of 80 °C. The total thickness of the resulting sheet was 200 µm.

### (Comparative Example 5)

A multilayered sheet was produced using the same method as Example 2, except that the amount of acetylene black added to the surface layer was set to 3%. With this surface-conductive layer, the surface resistance was not able to be measured.

### (Comparative Example 6)

An attempt was made to produce a multilayered sheet using the same method as Example 1 except with 30 layers in the substrate layer (average thickness 5.3 µm per layer of the sheet) and setting the amount of acetylene black added to the surface layer at 40%, but a sheet could not be formed due to the viscosity of the surface layer being too high.

### <Sheet Evaluating Method>

### 1. Punching Evaluation

A multilayered sheet produced according to each example and comparative example was formed using a vacuum rotary type embossed carrier tape former (CTF-200; CKD). Sprocket holes were punched in the embossed carrier tapes during the forming process in the following range of conditions.
(Punching conditions) pin/die clearance: 1-50 µm on one side
Punching speed: 10 to 300 mm/sec

Next, the sprocket holes of each sample were photographed at 30 times magnification using a measuring microscope (MF-A, Mitsutoyo), then the photographs were image-processed to quantify the frequency of occurrence of flash and burrs. The method of quantification was to binarize (convert to a black/white image) the taken photograph using image editing software (Adobe Photoshop), and to count the number of pixels of the punched hole portions. The proportion of coverage of the punched holes by flash and burrs was computed by calculating the proportion between the number of pixels of a perfect circle of a defined hole diameter without any flash or burrs and the number of pixels of the punched hole portion of each sample. Observation of the punched holes was performed ten times for each sample, and the average value was taken as the burr occurrence rate.

Fig. 1 shows examples of measuring microscope photographs when punching Example 2 and Comparative Example 1 with a pin/die clearance on one side of 20 µm and a punching speed of 250 mm/sec.

### 2. Optimal Punching Condition Pin/Die Clearance Evaluation

During the above punching evaluation, the range over which a burr occurrence rate of 4% or less was obtained under conditions of a clearance of 1 to 50 µm between the punching pin and die on one side and a punching speed of 10 to 300 mm/sec was confirmed, and the width of the processing conditions (processing window) for the punching process was evaluated. The smallest value obtained at each clearance condition at a punching speed of 250 mm/sec was taken as the burr occurrence rate of the examples and comparative examples.

### 3. Punching Hole Size Evaluation

In the above punching evaluation, measurements of 30 bored sprocket hole diameters (target value *φ* 1.5 mm) were made using a measuring microscope (MF-A, Mitsutoyo), to evaluate the range of disparity in the hole diameter size.

### 4. Slitting Evaluation

Slitting was performed with a ring-shaped combination blade of a vacuum rotary type embossed carrier tape former (CTF-200, CKD), and the slit end surfaces were observed under magnification with a measuring microscope to compare them for the presence and absence of flash and burrs. Those with almost no flash or burrs were rated "excellent", those with less than 0.5 mm were rated "good", and those with more than 0.5 mm were rated "fail".

The evaluation results for the multilayered sheet of each example are shown in Table 1, and the evaluation results for each comparative example are shown in Table 2.

**[Table 1]**

| | | Ex. 1 | Ex. 2 | Ex. 3 | Ex. 4 | Ex. 5 | Ex. 6 | Ex. 7 |
|---|---|---|---|---|---|---|---|---|
| Resin A | ABS (Denka SE-10) part | 100 | 100 | 100 | 100 | 100 | 100 | 100 |
| Resin A' | HIPS (Toyo Styrene H850) part | - | - | - | - | - | - | 100 |
| Total layers of Resin A and Resin A' | | 10 | 30 | 50 | 10 | 30 | 30 | 10 |
| Average thickness per layer (µm) | | 16 | 5.3 | 3.2 | 32 | 5.3 | 5.3 | 32 |
| Resin B | HIPS (Toyo Styrene H850) part | 80 | 80 | 80 | 80 | 90 | 70 | 80 |
| | CB (Denka Acetylene Black granules) part | 20 | 20 | 20 | 20 | 10 | 30 | 20 |
| Total sheet thickness (µm) | | 200 | 200 | 200 | 400 | 200 | 200 | 400 |
| Burr occurrence rate (%) | | 2.5 | 1.2 | 2.9 | 3.1 | 1.4 | 1.1 | 4.0 |
| Optimal punching condition pin/die one-side clearance (µm) | | 10-30 | 5-30 | 5-30 | 30-50 | 10-30 | 10-30 | 30-50 |
| Punching hole size stability (size error) | | ±0.05 | ±0.05 | ±0.05 | ±0.05 | ±0.05 | ±0.05 | ±0.05 |
| Slitting evaluation | | good | excel. | good | good | excel. | excel. | good |

**[Table 2]**

| | | Comp. Ex. 1 | Comp. Ex. 2 | Comp. Ex.3 | Comp. Ex. 4 | Comp. Ex. 5 | Comp. Ex. 6 |
|---|---|---|---|---|---|---|---|
| Resin A | ABS (Denka SE-10) part | 100 | 100 | 100 | 100 | 100 | 100 |
| Resin A' | - | | | - | - | - | - |
| Total layers of Resin A | | 1 | 5 | 120 | 1 | 30 | 30 |
| Average thickness per layer (µm) | | 160 | 32 | 1.3 | 200 | 5.3 | 5.3 |
| Resin B | HIPS (Toyo Styrene H850) part | 80 | 80 | 80 | - | 97 | 60 |
| | CB (Denka Acetylene Black granules) part | 20 | 20 | 20 | - | 3 | 40 |
| Total sheet thickness (µm) | | 200 | 200 | 200 | 200 | 200 | no film |
| Burr occurrence rate (%) | | 5.5 | 4.5 | 4.8 | 6.2 | 3.5 | |
| Optimal punching condition pin/die one-side clearance (µm) | | none | none | none | none | 20 | |
| Punching hole size stability (size error) | | ±0.15 | ±0.10 | ±0.10 | ±0.15 | ±0.10 | |
| Slitting evaluation | | fail | fail | fail | fail | fail | |

## Claims

1. A conductive multilayered sheet, comprising a substrate sheet comprising 10 to 50 laminated layers, each layer being composed of a thermoplastic resin A or a resin composition whose main component is thermoplastic resin A, with an average thickness of 2 to 50 µm; and having a conductive resin layer comprising 65 to 95 mass% of a thermoplastic resin B or a resin composition whose main component is thermoplastic resin B, and 5 to 35 mass% of carbon black, laminated onto a surface on one side or on both sides of the substrate sheet.

2. The conductive multilayered sheet in accordance with claim 1, wherein thermoplastic resin A is one resin chosen from among polystyrenic resins, ABS resins, polyester resins and polycarbonate resins.

3. The conductive multilayered sheet in accordance with claim 1, wherein the thermoplastic resin A is an ABS resin.

4. The conductive multilayered sheet in accordance with any one of claims 1 to 3, wherein thermoplastic resin B is one resin chosen from among polystyrenic resins, ABS resins, polyester resins and polycarbonate resins.

5. The conductive multilayered sheet in accordance with any one of claims 1 to 3, wherein thermoplastic resin B is a polystyrenic resin or a polycarbonate resin.

6. An electronic component package comprising the conductive multilayered sheet in accordance with any one of claims 1 to 5.

7. A carrier tape comprising the conductive multilayered sheet in accordance with any one of claims 1 to 5.

8. A tray comprising the conductive multilayered sheet in accordance with any one of claims 1 to 5.

## Patentansprüche

1. Leitfähige mehrschichtige Folie, umfassend eine Substratfolie umfassend 10 bis 50 laminierte Schichten, wobei jede Schicht aus einem thermoplastischen Harz A oder einer Harzzusammensetzung, deren Hauptkomponente das thermoplastische Harz A ist, mit einer durchschnittlichen Dicke von 2 bis 50 µm besteht; und eine leitfähige Harzschicht, die 65 bis 95 Masse-% eines thermoplastischen Harzes B oder eine Harzzusammensetzung, deren Hauptkomponente das thermoplastische Harz B ist, und 5 bis 35 Masse-% Ruß umfasst, auf eine Oberfläche auf einer Seite oder auf beiden Seiten der Substratfolie laminiert ist.

2. Leitfähige mehrschichtige Folie nach Anspruch 1, wobei das thermoplastische Harz A ein Harz ist, ausgewählt aus Polystyrolharzen, ABS-Harzen, Polyesterharzen und Polycarbonatharzen.

3. Leitfähige mehrschichtige Folie nach Anspruch 1, wobei das thermoplastische Harz A ein ABS-Harz ist.

4. Leitfähige mehrschichtige Folie nach einem der Ansprüche 1 bis 3, wobei das thermoplastische Harz B ein Harz ist, ausgewählt aus Polystyrolharzen, ABS-Harzen, Polyesterharzen und Polycarbonatharzen.

5. Leitfähige mehrschichtige Folie nach einem der Ansprüche 1 bis 3, wobei das thermoplastische Harz B ein Polystyrolharz oder ein Polycarbonatharz ist.

6. Elektronisches Bauteilpaket umfassend die leitfähige mehrschichtige Folie nach einem der Ansprüche 1 bis 5.

7. Trägerband, umfassend die leitfähige mehrschichtige Folie nach einem der Ansprüche 1 bis 5.

8. Ein Tablett, umfassend die leitfähige mehrschichtige Folie nach einem der Ansprüche 1 bis 5.

## Revendications

1. Feuille multicouche conductrice, comprenant une feuille de substrat comprenant 10 à 50 couches stratifiées, chaque couche étant composée d'une résine thermoplastique A ou d'une composition de résine dont le composant principal est la résine thermoplastique A, en une épaisseur moyenne de 2 à 50 µm ; et comportant une couche de résine conductrice comprenant 65 à 95 % en masse d'une résine thermoplastique B ou d'une composition de résine dont le composant principal est la résine thermoplastique B, et 5 à 35 % en masse de noir de carbone, stratifiée sur une surface sur un côté ou sur les deux côtés de la feuille de substrat.

2. Feuille multicouche conductrice selon la revendication 1, dans laquelle la résine thermoplastique A est une résine choisie parmi les résines de polystyrène, les résines ABS, les résines de polyester et les résines de polycarbonate.

3. Feuille multicouche conductrice selon la revendication 1, dans laquelle la résine thermoplastique A est une résine ABS.

4. Feuille multicouche conductrice selon l'une quelconque des revendications 1 à 3, dans laquelle la résine thermoplastique B est une résine choisie parmi les résines de polystyrène, les résines ABS, les résines de polyester et les résines de polycarbonate.

5. Feuille multicouche conductrice selon l'une quelconque des revendications 1 à 3, dans laquelle la résine thermoplastique B est une résine de polystyrène ou une résine de polycarbonate.

6. Emballage de composant électronique comprenant la feuille multicouche conductrice de l'une quelconque des revendications 1 à 5.

7. Bande de support comprenant la feuille multicouche conductrice de l'une quelconque des revendications 1 à 5.

8. Plateau comprenant la feuille multicouche conductrice de l'une quelconque des revendications 1 à 5.
